# EUROPEAN PATENT APPLICATION

(11) **EP 1 997 599 A1**
(43) Date of publication of application: **03.12.2008**
(21) Application number: 07738905.4
(22) Date of filing: 16.03.2007
(51) Int. Cl.: B28B 11/02, B01D 39/00, B01D 39/20, B01D 46/00

(54) **METHOD OF MANUFACTURING SEALED HONEYCOMB STRUCTURE**

(30) Priority: 17.03.2006 JP 2006074665; 18.12.2006 JP 2006340175
(71) Applicant: NGK Insulators, Ltd., Nagoya-shi, Aichi 467-8530 (JP)
(72) Inventor: ICHIKAWA, Yukihito, Nagoya-shi, Aichi 467-8530 (JP)
(74) Representative: Paget, Hugh Charles Edward
(86) International application number: PCT/JP2007/055460
(87) International publication number: WO 2007/119408

(57) **Abstract**

The manufacturing method of the plugged honeycomb structure for DPF wherein a plugging depth thereof can easily be made uniformly and briefly at low costs. In the method for manufacturing a plugged honeycomb structure having a plugging portion formed in one opening end portion of each of predetermined cells of a cylindrical honeycomb structure including a plurality of cells partitioned and formed into a honeycomb shape by porous partition walls to form fluid passages, holes 3 of a perforated elastic porous member 2 are impregnated beforehand with a slurried plugging material 5, and the elastic porous member 2 is pressed on an end surface of the honeycomb structure 6 to thereby fill the slurried plugging material 5 filled into the holes of the elastic porous member 2 into cell 7 passages of the honeycomb structure 6 to form the plugging portions 7a.

## Description

### Technical Field

The present invention relates to a method for manufacturing a plugged honeycomb structure. Further, the present invention relates to a plugged honeycomb structure-manufacturing method capable of easily manufacturing a plugged honeycomb structure at low costs so that deposits deposited on an end surface of the structure are reduced in a case where the structure is used as a filter or the like. The present invention more particularly relates to a method for manufacturing a plugged honeycomb structure in which a plugging depth of the honeycomb structure can easily be made uniform.

### Background Art

In recent years, in various fields including cars, chemistry, powers, irons and steels and industrial waste disposal, a plugged honeycomb structure made of ceramic having excellent resistances to heat and corrosion has been used as a dust-collecting filter for use in applications such as environmental countermeasures for prevention of pollution and product recovery from a high-temperature gas. For example, such a plugged honeycomb structure is preferably used as a dust collecting filter for use under a corrosive gas atmosphere at high temperature, such as a diesel particulate filter (DPF) which traps particulate matter discharged from a diesel engine (e.g., Patent Document 1).

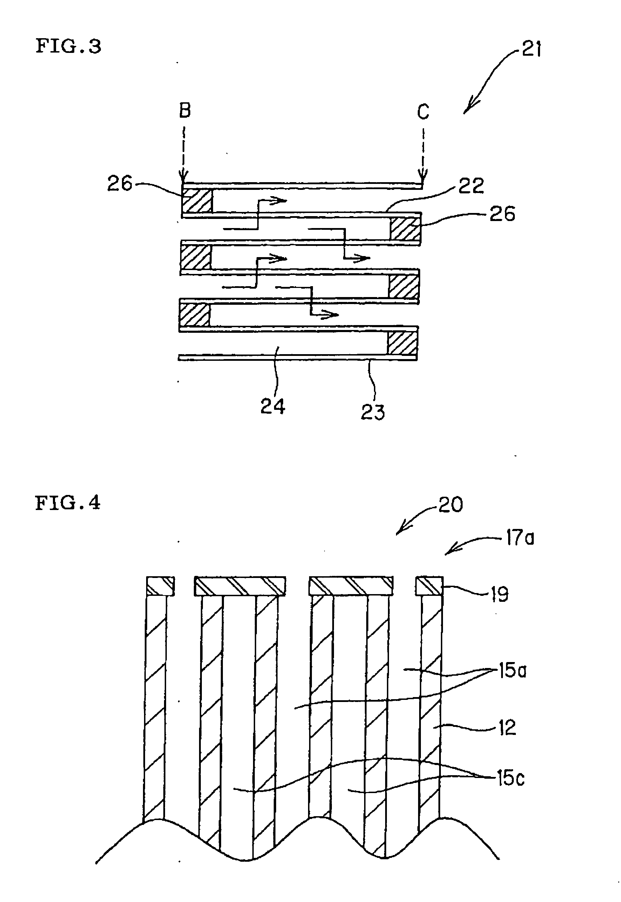

As shown in FIG. 3, the above-described plugged honeycomb structure for use as the dust collecting filter includes a cylindrical honeycomb structure 23 having porous partition walls 22 partitioning and forming a plurality of cells 24 functioning as fluid passages and plugging members 26 plugging an opening of each of predetermined cells on one side and an opening of each of the remaining cells on the other side.. In a plugged honeycomb structure 21 shown in FIG. 3, the plugging members 26 alternately plug an inlet side end surface B and an outlet side end surface C of each of the plurality of cells 24.

The above plugged honeycomb structure can be manufactured by obtaining a non-fired cylindrical honeycomb structure having porous partition walls partitioning and forming a plurality of cells functioning as fluid passages by extrusion, then filling plugging slurry including ceramic into an opening of each of the predetermined cells on one side and an opening of each of the remaining cells on the other side of the resultant non-fired honeycomb structure or a honeycomb structure obtained by firing the non-fired honeycomb structure, and firing the structure.

Furthermore, as a method for manufacturing the plugged honeycomb structure for use as the dust collecting filter described above, there has been proposed, for example, a method where an adhesive sheet or the like is bonded to one end surface of a honeycomb formed body as a non-fired ceramic dry body, holes are made in only portions corresponding to cells to be plugged (plugged cells) in the adhesive sheet or the like by laser processing or the like utilizing image processing to obtain a mask, the end surface of the formed honeycomb body provided with the mask is immersed in slurry (ceramic slurry), the slurry is filled into the cells to be plugged of the honeycomb formed body to form plugging portions, subjecting the other end surface of the honeycomb formed body to steps similar to the above steps, and then drying and firing the body to obtain the plugged honeycomb structure (e.g., Patent Document 1).

[Patent Document 1] JP-A-2001-300922
[Patent Document 2] JP-A-2005-270755

### Disclosure of the Invention

### Problem to be Solved by the Invention

In the above method for manufacturing the plugged honeycomb structure, in order to make depth of plugging portions uniform, it is demanded that the cells be plugged uniformly with a slurried plugging material including ceramic slurry. Therefore, a liquid surface of the slurried plugging material needs to be leveled in a vessel in which the slurried plugging material including the ceramic slurry is stored. However, even during a step of leveling the liquid surface of the slurried plugging material, the slurried plugging material moves to side surfaces of the honeycomb structure at an outer peripheral portion of the honeycomb structure. Therefore, there is an unsolved problem that the depth of the plugging portions of the slurried plugging material at the outer peripheral portion of the honeycomb structure easily decreases. In addition, as the outer configuration dimensions of the honeycomb structure increase, it becomes more difficult to level the slurried plugging material in the container, which causes a problem of a large variance in plugging depth.

As a result of an intensive investigation of a step of easily uniformalizing depth of the plugging portion formed by the slurried plugging material in the honeycomb structure, the present inventor has reached the present invention with, as a problem to be solved, the provision of a simple plugging method in which a liquid surface of the slurried plugging material does not have to be leveled in a vessel containing the slurried plugging material and in which the depth of the plugging portion can easily be uniformalized.

To achieve the above aim, the present invention provides the following method for manufacturing a plugged honeycomb structure.

[1] A method for manufacturing a plugged honeycomb structure having a plugging portion formed in one opening end portion of each of predetermined cells of a cylindrical honeycomb structure including a plurality of cells partitioned and formed into a honeycomb shape by porous partition walls to form fluid passages, wherein holes of a perforated elastic porous member are impregnated beforehand with a slurried plugging material, and the elastic porous member is pressed on an end surface of the honeycomb structure to thereby fill the slurried plugging material filled into the holes of the elastic porous member into cell passages of the honeycomb structure to form the plugging portions.

[2] A method for manufacturing a plugged honeycomb structure having a plugging portion formed in one opening end portion of each of predetermined cells of a cylindrical honeycomb structure including a plurality of cells partitioned and formed into a honeycomb shape by porous partition walls to form fluid passages, wherein another elastic porous member is inserted beforehand into holes of a perforated elastic porous member, the elastic porous member inserted into the holes is impregnated with a slurried plugging material, then the elastic porous member impregnated with the slurried plugging material in the holes is pressed on an end surface of the honeycomb structure, and the slurried plugging material contained in the elastic porous member is filled into cell passages of the honeycomb structure to form the plugging portions.

[3] A method for manufacturing a plugged honeycomb structure according to the above [1] or [2], wherein a means for pressing the perforated elastic porous member on the end surface of the honeycomb structure is a roller.

[4] A method for manufacturing a plugged honeycomb structure according to any one of the above [1] to [3], wherein the elastic porous member is a cloth-like or sponge-like porous member or absorbent member.

[5] A plugged honeycomb structure having a plugging portion formed in one opening end portion of each of predetermined cells of a cylindrical honeycomb structure including a plurality of cells partitioned and formed into a honeycomb shape by porous partition walls to form fluid passages, wherein the plugging portions are formed in multilayer along a cell passage direction.

[6] A plugged honeycomb structure according to the above [5], wherein the plugging portions are formed in multilayer along the cell passage direction, and a material for at least one layer is different from that for the other layers.

The manufacturing method of the present invention has the following effect. That is, the depth of the plugging portions of the honeycomb structure can freely be adjusted in accordance with a compressive deformation amount of the elastic porous member. By changing the compressive deformation amount depending on a portion of the elastic porous member, the depth of the plugging portions of the cells of the honeycomb structure disposed in the corresponding positions can be changed. For example, it is possible that the depth of the plugging portions is increased in the center of the honeycomb structure and decreased at an outer peripheral portion. Conversely, it is also possible that the depth of the plugging portion is decreased in the center of the honeycomb structure and increased at the outer peripheral portion. In consequence, it is possible to solve an unsolved problem that the depth of the plugging portions at the outer peripheral portion of the honeycomb structure is prone to decrease. Furthermore, in a plugging method in a state in which the honeycomb structure is disposed so as to have a horizontal axis, the slurry is held in the porous member. Therefore, the plugging is performed while the slurry does not drip off, and variance of the plugging depth can be prevented without damaging the end surfaces of the honeycomb structure.

### Brief Description of the Drawings

[Fig. 1] Fig. 1 is a schematic diagram showing one embodiment of the present invention.
[Fig. 2] Fig. 2 is a schematic diagram showing another embodiment of the present invention.
[Fig. 3] Fig. 3 is a sectional view showing a constitution of a plugged honeycomb structure.
[Fig. 4] Fig. 4 is a sectional view showing one example of a honeycomb structure provided with a mask.
[Fig. 5] Fig. 5 is a schematic diagram showing another embodiment of the present invention.
[Fig. 6] Fig. 6 is a schematic diagram showing another embodiment of the present invention.
[Fig. 7] Fig. 7 is a schematic diagram showing one embodiment of a plugging portion structure formed in the present invention.
[Fig. 8] Fig. 8 is a schematic diagram showing another embodiment of a plugging portion structure formed in the present invention.

### Description of Reference Numerals

1: storage vessel, 2: elastic porous member, 3: hole of elastic porous member, 4: surface of elastic porous member, 5: slurried plugging material, 6: honeycomb structure, 7: cell of honeycomb structure, 7a: plugging portion, 8: blade plate, 9: slurried plugging material, 10: perforated elastic porous member, 11: roller, 12: non-fired honeycomb structure, 13: honeycomb structure, 13a: upper end surface of honeycomb structure, 14: plugging portion, 15a: predetermined cells, 15c: cells other than predetermined cells (remaining cells), 17a: end surface on one side of non-fired honeycomb structure, 19: mask, 20: honeycomb structure provided with mask, 21: plugged honeycomb structure, 22: porous partition wall, 23: honeycomb structure, 24: cell, 26: plugging member, B: inlet side end surfaces of a plurality of cells, C: outlet side end surfaces of a plurality of cells, 31: slurried plugging material, 32: elastic porous member, 33: storage vessel, 34: honeycomb structure, 35: conveyer, 41: slurried plugging material, 42: elastic porous member, 43: storage vessel, 44: honeycomb structure, 45: conveyer, 70: plugging portion, 71: first layer, 72: second layer, 73: third layer, 74: fourth layer, 75: fifth layer, 76: inward face of plugging portion, 77: surface of plugging portion, 78: partition wall of cells, 79: end surface of honeycomb structure

### Best Mode for Carrying out the Invention

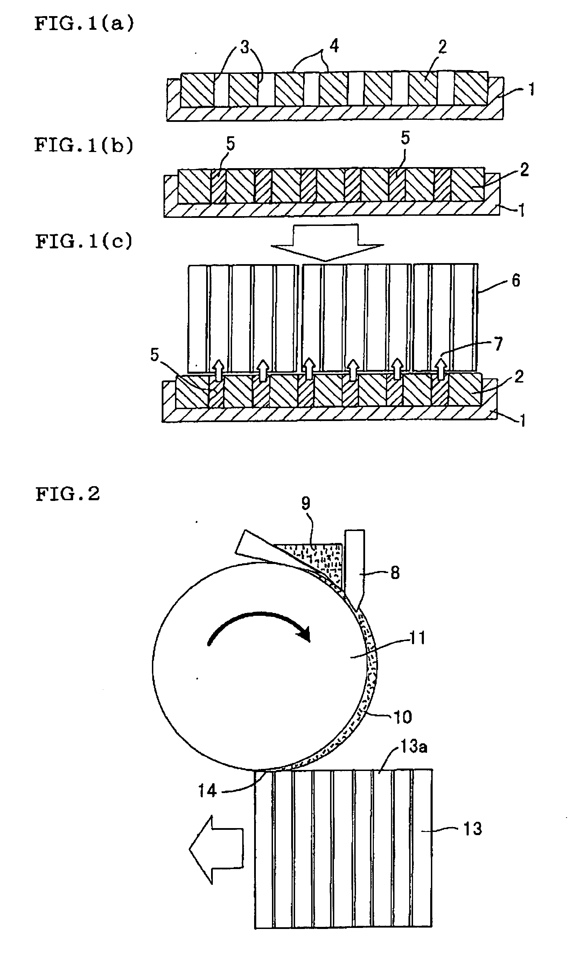

An embodiment of a method for manufacturing a plugged honeycomb structure of the present invention will hereinafter be described in detail with referring to the specific embodiment of the present invention shown in Figs. 1(a), 1(b), 1(c) and 2. The present invention should not be construed by limiting to this embodiment, and various kinds of changes, modifications and improvements can be added thereto based on knowledge of a person of ordinary skill within the range of not deviating from the scope of the present invention.

A cylindrical honeycomb structure having a plurality of cells constituting fluid passages partitioned and formed by porous partition walls to form a honeycomb shape is manufactured by a method described in, for example, Patent Document 2. For example, by subjecting a forming material including a ceramic to extrusion forming, it is possible to obtain a non-fired cylindrical honeycomb structure having porous partition walls partitioning and forming a plurality of cells functioning as fluid passages. As the forming material including the ceramic, it is possible to preferably use a material obtained by adding a binder, a dispersion medium, or the like, to powder of a ceramic such as cordierite, mullite, alumina, spinel, silicon carbide, silicon nitride, lithium aluminum silicate or aluminum titanate. Though there is no particular limitation on an extrusion method, it is possible to use a conventionally known method such as extrusion forming using a vacuum extruder.

There is no limitation on a elastic porous member. However, it is preferably cloth-like or sponge-like porous member or absorbent member. Cloth means a textile obtained by weaving with fibers and includes woven fabric and nonwoven fabric. Examples of the fibers include natural fibers; regenerated fibers of rayon, cupra, and the like; organic polymer fibers such as acetate, vinylon, polyurethane synthetic fibers having elasticity and stretch properties, and polyester fibers having improved absorbability by the use of capillarity; inorganic fibers; and amorphous metal fibers. The material is not limited. The fibers may be used singly or in combination.

In general, a sponge is a foam having a continuous bubble structure in which unit bubbles each having a perforated partition wall continue to one another. A liquid, a fine powder body, or a viscous body can be held in the bubble structure. In general, examples of a material for the sponge include polyvinylchloride, polyethylene, vinylon, viscose, nylon, fluororesin, synthetic rubber, phenol resin, urea resin and soft polyurethane, but the sponge-like member of the present invention is not limited to these materials, and an arbitrary material can be used as the sponge-like member. In the present invention, the slurried plugging material including ceramic slurry can be held in the bubble structure of the sponge. Since the sponge-like member has a continuous bubble structure in which unit bubbles each having a perforated partition wall continue to one another, it shows excellent water absorption and can keep a large amount of plugging material to be able to supply a large amount of plugging material at once in cells in the honeycomb structure. Therefore, the sponge-like member can suitably be used in the case of forming relatively deep plugging portions.

To impregnate the perforated elastic porous member with the slurried plugging material, for example, the slurried plugging material is infiltrated into hole portions of the perforated elastic porous member including sealed hole inner surfaces of the elastic porous member and the sealed surface of the elastic porous member, thereby impregnating the member.

As a member which seals the hole inner surfaces of the elastic porous member and the surface of the elastic porous member of the present invention, a member heretofore used as an end surface sealing member can be utilized as necessary. For example, a wrap film, an aluminum sheet, a copper sheet, or the like, can be utilized.

Moreover, in the method for manufacturing the plugged honeycomb structure of the present embodiment, when a sealing member constituted of a combustible substance is used as the end surface sealing member of the honeycomb structure, the sealing member may be burnt out during firing of a plugged honeycomb structure precursor. By using such a combustible sealing member, the end surface sealing member does not have to be removed. Therefore, manufacturing steps can be simplified. Especially, in the case of burning out the sealing member by the firing, it is preferable to use a sealing member constituted of the combustible substance which does not disappear or is not deformed during drying but which disappears during the firing. Preferable examples of the sealing member include a sealing member made of polyvinylchloride.

In the present invention, another elastic porous member having a diameter substantially equal to or smaller than an inner diameter of the hole of the perforated elastic porous member may be contained in the hole of the perforated elastic porous member having the sealed hole inner surface and the sealed surface. It is preferable that the other elastic porous member contained in the hole comes into contact with a seal of the hole inner surface. The other elastic porous member contained in the hole may be impregnated with the slurried plugging material.

A material of the other elastic porous member contained in the hole may be the same as or different from that of the perforated elastic porous member having the sealed hole inner surfaces and the sealed surfaces. Pieces of the perforated elastic porous member taken out of the perforated elastic porous member may be used.

Next, a step of filling the perforated elastic porous member with the slurried plugging material to hold the material will be described. Incidentally, in the following method, the elastic porous member will be referred to as a "sponge-like member".

First, holes are made in the sponge-like member. There is not any special restriction on arrangement of the holes. However, since the holes are filled with the slurried plugging material to hold the material, it is preferable that the holes correspond to positions of the plugging portions of the resultant plugged honeycomb structure. For example, a checkerwise arrangement or the like is considered, but the present invention is not limited to the arrangement. For example, an amount of the plugging portions in one end surface does not have to be equal to that of the plugging portions in the other end surface.

Subsequently, the hole inner surfaces of the sponge-like member and the surface of the sponge-like member are sealed. In consequence, the slurried plugging material is prevented from being infiltrated in portions of the sponge-like member other than the holes, and the slurried plugging material having a desired arrangement is held in hole portions of the sponge-like member. The slurried plugging material is supplied by, for example, injecting, spraying or the like. In the present invention, any known effective method may be utilized.

For example, as shown in Figs. 1(a) and 1(b), a perforated sponge-like member 2 is immersed in a slurried plugging material 5 in a storage vessel 1 in a state in which inner surfaces of holes 3 of the sponge-like member 2 and a surface 4 of the sponge-like member are sealed. In consequence, the slurried plugging material 5 is supplied to the holes 3 of the sponge-like member 2.

To supply the slurried plugging material into the cells of the honeycomb structure from the sponge-like member, for example, a material obtained by kneading powder of a ceramic to which a binder, a dispersion medium or the like has been added is used as the slurried plugging material. The material may be supplied as follows. For example, the slurried plugging material is solidified (by cooling or the like), the solidified slurried plugging material is charged into the holes of the sponge-like member, and then the slurried plugging material is melted and supplied. For example, after filling the solidified slurried plugging material into the cells of the honeycomb structure, the slurried plugging material may be melted and supplied into the cells of the honeycomb structure.

In a case where another sponge-like member is included in the holes of the sponge-like member, a sponge is immersed in the slurry of the vessel in which the slurried plugging material is stored to infiltrate the slurry into the sponge. Alternatively, the sponge-like member in the holes is pressed on a slurry surface in a compressed state. In consequence, when the compressed state of the sponge-like member in the holes is released, the slurried plugging material enters the holes of the sponge-like member.

The perforated sponge-like member for use in the present invention can be used in a flat vessel fixed as shown in, for example, Figs. 1(a), 1(b) and 1(c). However, as shown in Fig. 2, the member may be fixed to the surface of a rotary roller, when used. Figs. 1(a), 1(b) and 1(c) are schematic diagrams showing one embodiment of the present invention, and Fig. 2 is a schematic diagram showing another embodiment of the present invention.

In the embodiment of the present invention, there is not any special restriction on a type of the ceramic powder for the slurry to be used in the slurried plugging material. For example, powder similar to or different from the powder of the ceramic.included in the forming material to be extruded into the honeycomb structure may be used.

In the embodiment of the present invention, a material obtained by kneading the powder of a ceramic such as cordierite to which the binder, the dispersion medium, or the like has been added can preferably be used as the slurried plugging material. For example, water, the binder and glycerin may be added to the cordierite powder to prepare the slurried plugging material.

Moreover, as the material of the honeycomb structure of the present invention, it is preferable to select, as a main crystal phase, one type from a group consisting of cordierite, silicon carbide, alumina, mullite, aluminum titanate and lithium aluminum silicate (LAS) from the viewpoints of strength, heat resistance, and the like. It is to be noted that there is an effect that, when the same slurry as that of the honeycomb structure is used as the slurry of the slurried plugging material, a coefficient of thermal expansion of the material becomes equal to that of the structure.

A method shown in Figs. 1(a), 1(b) and 1(c) will be described in detail. To impregnate the sponge-like member 2 with the slurried plugging material 5, as described above, the sponge-like member 2 is immersed in the storage vessel 1 in which the slurried plugging material 5 is stored in a state in which the inner surfaces of the holes 3 of the sponge-like member 2 and the surface 4 of the sponge-like member 2 are sealed. Moreover, for example, when the checkerwise perforated sponge-like member 2 is disposed in the storage vessel 1 of the slurried plugging material to press a honeycomb structure 6 on the checkerwise perforated sponge-like member 2 impregnated with the slurried plugging material 5, the slurried plugging material 5 held in the holes 3 is filled into corresponding cells 7 of the honeycomb structure 6 to form plugging portions 7a and manufacture the plugged honeycomb structure of the present invention. In consequence, an object of the present invention to make a plugging depth uniform is achieved.

Furthermore, when the honeycomb structure is horizontally disposed and the sponge-like member is pressed on both the end surfaces of the structure at the same time, the slurried plugging material contained in the sponge-like member is simultaneously supplied to both the end surfaces of the honeycomb structure, and the plugging portions are simultaneously formed in both the end surfaces. Therefore, a plugging operation is quickly performed. In such a method, the vessel in which the slurried plugging material is stored needs to be vertically disposed. If the sponge is not present, the slurried plugging material drips off by the gravity, and the plugging depth becomes non-uniform. However, when the sponge-like member is impregnated with the plugging material, the plugging material does not drip off, and the plugging depth can easily be made uniform.

In addition, when the holes of the checkerwise perforated sponge-like member contain the slurried plugging material via the other sponge-like member, the other sponge-like member in the holes contains and holds the slurried plugging material.

In this embodiment, since any movement does not occur in the vessel, the slurried plugging material at an outer peripheral portion of the honeycomb structure does not escape to side surfaces of the honeycomb structure during insertion under pressure. Furthermore, when a water content of the slurried plugging material of the present invention is increased, viscosity lowers, and the sponge-like member is easily impregnated with the slurried plugging material. Therefore, it is especially preferable to increase the content. To prevent the slurried plugging material from being leaked from the sponge-like member owing to the decrease of the slurry viscosity, it is preferable that, after the sponge-like member is impregnated with the slurried plugging material having a low viscosity, the sponge-like member is dried to thereby evaporate the water content. In consequence, the viscosity of the slurried plugging material is appropriately increased.

Moreover, to press another sponge-like member inserted into the holes of the checkerwise perforated sponge-like member on the honeycomb structure, for example, as shown in Fig. 4, one end surface 17a of a non-fired honeycomb structure 12 is provided with a mask 19 which covers openings of cells (remaining cells) 15c other than predetermined cells 15a to obtain a honeycomb structure 20 provided with the mask. Subsequently, the checkerwise perforated sponge-like member impregnated with the slurried plugging material of the present invention may be pressed on the structure. The slurried plugging material contained in the compressed and deformed sponge-like member is filled into cell passages of the honeycomb structure to thereby form the plugging portions. There is not any special restriction on the method of supplying the slurried plugging material to the sponge. Examples of the method include a method of spraying the plugging material over the surface of the sponge with a spray or the like, a method of feeding the plugging material from the backside of the sponge, and a method of pressing the sponge on a vessel in which the plugging material is stored to allow the sponge to absorb the plugging material.

There is not any special restriction on a method of drying the slurried plugging material, but it is possible to use, for example, a method of mounting and drying a honeycomb structure provided with the mask on a hot plate or the like in'a state in which one end surface of the structure provided with an end surface sealing member having a solidification function by quickly drying in the state that the surface of the plugging portions are sealed in order to suppress kink on the plugged surface is directed downwards; hot air drying performed by spraying hot air to thereby dry the structure; microwave drying; superheat steam drying; far infrared drying; vacuum drying; freeze drying or the like. Furthermore, in a case where an aluminum foil, a copper foil or the like is used as the end surface sealing member, the end surface sealing member is energized or inductively heated to generate heat from the end surface sealing member itself. The slurried plugging material may be dried by this heat. By mixing a thermally curing agent such as epoxy resin, phenol resin, melanine resin, or urea resin or a radiation curing agent; plugging layers can be formed by quickly solidifying the plugging material after the plugging material is filled into the cells.

The plugged honeycomb structure precursor obtained by pressing the sponge-like member is fired to obtain the plugged honeycomb structure. There is not any special restriction on the method of firing the plugged honeycomb structure precursor, and the method can be performed according to a firing step of a conventionally known method for manufacturing the plugged honeycomb structure. According to such a method for manufacturing the plugged honeycomb structure, when the structure is used in, for example, a DPF or the like, it is possible to easily manufacture the plugged honeycomb structure at low costs so that deposits deposited on the end surface of the structure are reduced.

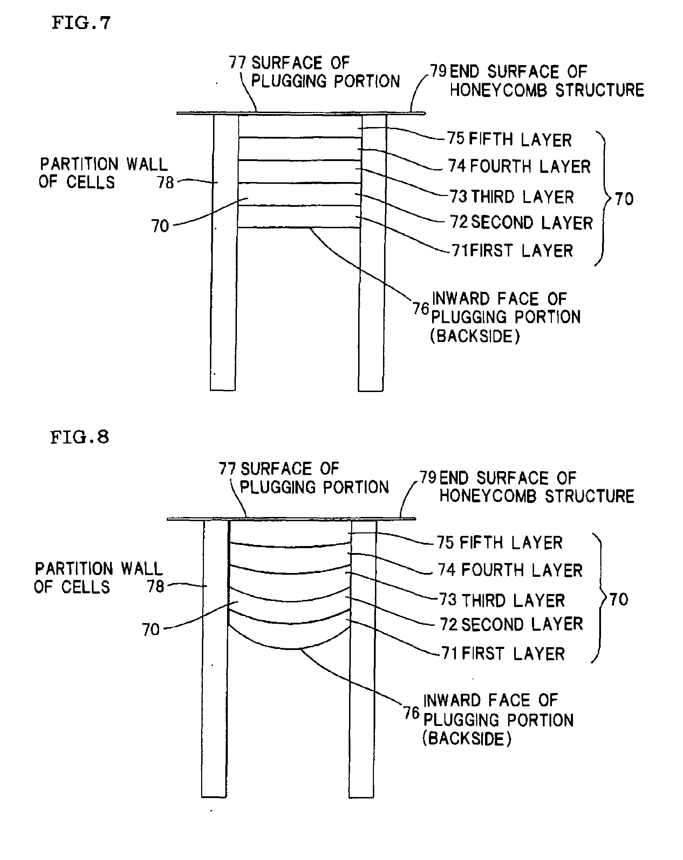

Since the plugging member filled into the holes in the sponge-like member supplies the plugging member in the cells corresponding to the holes in the present method, it is necessary to position the holes of the sponge-like member and the cells, and a flat-shaped sponge-like member is suitable. As shown in Figs. 1 and 5 to 6, suitable examples of the method include a method where a plurality of flat-shaped sponge-like members (porous members) 32 are disposed in series, which are moved on a conveyer 35 to be passed in a multistage and a method where the flat-shaped sponge-like members (porous members) 32 are disposed in a rotary shape to be rotated. Speeding up can be realized by a method where a plugging member is filled into each of the flat-shaped members to perform continuous plugging. There may alternatively be employed a method where a shallow plugging is repeated several times. This method makes uniformalization of relatively shallow plugging depth (shallow plugging depth) easy. Alternatively, there may be employed a method where plugging is repeated several times with one sponge-like member on an end surface of a honeycomb structure. In such a case, according to the present invention, as shown in schematic views of Figs. 7 and 8, a plugging portion structure formed of a plurality of layers (the first layer 71 to the fifth layer 75) along a cell passage can be obtained as the plugging portions 70. By changing properties (density, material, etc.) of the plugging material depending on each layer, plugging portions having different layers can be formed. In a DPF, plugging portions are prone to have high temperature on the inward face side (backside) 76 due to heat generated upon regenerating the DPF by combusting diesel particulate matter. Therefore, it is preferable to form a plugging portion layer with a material having high heat resistance and high heat capacity on the inward face 76 of each of the plugging portions. In addition, since a foreign substance contained in exhaust gas flies in at a high speed on stream of the exhaust gas to collide the DPF inlet end surface, an erosion phenomenon is sometimes caused. In such a case, it is preferable to form a plugging portion layer with a material having high heat resistance and high hardness on the plugging portion inlet side (surface side) 77. Further, according to the present invention, not only on a surface of the plugging portions, but also on a surface on partition wall end surface side, a film having uniform thickness and high hardness over the whole end face can be formed easily at high speed. Dense plugging portions over the whole depth raise rigidity of the plugging portions and, in some cases, raise thermal stress or cause stress concentration between the plugging portion and the partition wall. Therefore, it is preferable to impart flexibility to the plugging portions by a layered structure of different materials as necessary. Incidentally, in Figs. 7 and 8, 78 denotes a cell partition wall, and 79 denotes an end surface of a honeycomb structure.

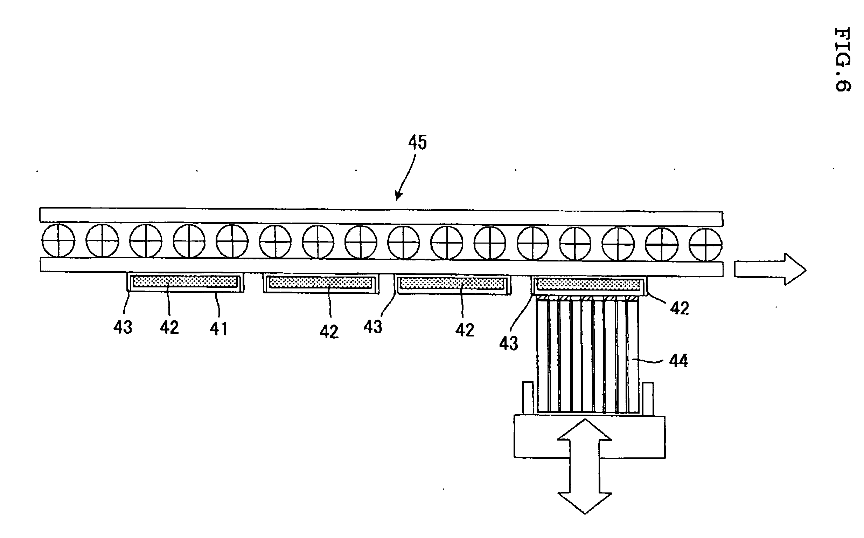

As shown in Fig. 6, there may be employed a method where a flat-shaped sponge-like member (porous member) 42 is disposed on the upper side of the honeycomb structure 44 for press fitting. Alternatively, there may be employed a method where a honeycomb structure is disposed with the through-hole direction being lateral (horizontal) to dispose a flat-shaped sponge-like member (porous member) on the side of the honeycomb structure in such a manner that the flat-shaped sponge-like member may correspond with the honeycomb structure. The entire end surface of the honeycomb structure may be plugged with one flat-shaped member or may be plugged with a plurality of flat-shaped members by dividing the entire end surface of the honeycomb structure. For example, the central portion of an end surface of the honeycomb structure is plugged with one flat-shaped member in the first place, and then the remaining outer peripheral portion of the end surface of the honeycomb structure is plugged with another flat-shaped member. At this time, the flat-shaped member for plugging the outer peripheral portion may have a ring shape to press the flat portion of an end surface of a ring against an end surface of the honeycomb structure. This manner enables to set up the plugging depth independently in the central portion and the outer peripheral portion. In a similar manner, plugging depth at an arbitrary position can freely be set up by predetermined division.

Further, since only a part of an end surface is pressed in a plugging method where a elastic porous member 10 is pressed on the upper end surface 13a of the honeycomb structure 13 with rotating the elastic porous member 10 formed on a surface of a roller 11, plugging material can be supplied into the cells with pressing force lower than that in a method where the entire end surface is pressed.

Moreover, in the method for manufacturing the plugged honeycomb structure of the present embodiment, a plugging portion-forming mask or an end surface-sealing member which is constituted of a combustible substance may be used. In this case, when the plugged honeycomb structure precursor is fired, the end surface-sealing member may be burnt out. According to such a constitution, the plugging portion-forming mask or the end surface-sealing member does not have to be removed. Therefore, manufacturing steps can be simplified. Especially, to burn out the end surface-sealing member by the firing, it is preferable to use an end surface-sealing member constituted of a combustible substance which does not disappear or is not deformed during the drying but which disappears during the firing. Preferable examples of the end surface-sealing member include a member made of polyvinylchloride or the like.

Furthermore, in the method of manufacturing the plugged honeycomb structure of the present embodiment, the mask may be used as described above. In this case, when the plugged honeycomb structure precursor is fired, the mask which covers the openings of the cells other than the predetermined cells may be eliminated. In this case, when the end surface-sealing member and the mask are simultaneously eliminated during the firing, a step of removing the mask can be omitted, and the manufacturing steps can be simplified.

It is to be noted that in the method of manufacturing the plugged honeycomb structure of the present embodiment, a catalyst may be carried by inner surfaces of the partition walls of the plugged honeycomb structure and/or the inside of the partition walls of the structure obtained by the above method. For example, when the plugged honeycomb structure is used as the DPF, it is preferable to carry a catalyst having a function of promoting combustion of the deposits (particulate matter) trapped by the partition walls. Preferable examples of such a catalyst include a noble metal based catalyst such as Pt, Pd or Rh and a non-metal based perovskite type catalyst. The method of carrying the catalyst can be performed according to a conventional method of carrying the catalyst by a filter such as the DPF.

A method of Fig. 2 will be described in detail. For example, a slurried plugging material 9 held by two blade plates 8 is supplied to holes of a perforated sponge-like member 10 formed on the surface of a roller by gravity or pressurization. Subsequently, while a roller 11 provided with the perforated sponge-like member impregnated with the slurried plugging material 9 is rotated at a predetermined speed, the roller is pressed on an upper end surface 13a of a honeycomb structure 13 to thereby continuously supply the slurried plugging material 9 contained in holes to the cells of the honeycomb structure 13 and form plugging portions 14. According to the method of Fig. 2, since the slurried plugging material 9 is held by the perforated sponge-like member 10, the honeycomb structure is vertically disposed beforehand, then the perforated sponge-like member is pressed on the upper end surface of the structure to be able to plug the upper end surface of the structure. When the honeycomb structure is large and heavy, the light perforated sponge-like member can be moved instead of moving the honeycomb structure above and below. Therefore, a device can mechanically be simplified, and the honeycomb structure can be prevented from being damaged. Furthermore, the method has a characteristic that the structure can continuously be manufactured as compared with the method of Figs. 1(a), 1(b) and 1(c). A method for supplying slurry to a member 8 on the surface of the roller 7 is not limited to that shown in Fig. 2, and various methods can be employed. There may be employed a method where plugging is performed little by little with a plurality of rollers disposed in series.

A specific implementation result of a method for manufacturing a plugged honeycomb structure of the present invention will hereinafter be described.

### (Example 1)

For example, as a raw material, a cordierite forming material including talc, kaolin and alumina described above as main materials is blended with water and a binder, dispersed, mixed and kneaded to obtain a forming material. The material is extruded into a columnar shape by a clay kneader, and extruded by an extruder to obtain a honeycomb formed body. When a honeycomb structure is manufactured using the formed body obtained in this manner, the resultant formed body is dried and cut to have a predetermined length to obtain a dried body, and cell groups at both the end surfaces of this dried body are alternately plugged and then fired to obtain a fired body. Next, partition walls of about one to three cells are ground and removed from an outer peripheral wall and an outermost periphery of the resultant fired body. Subsequently, an outer periphery is coated with a ceramic coating material to form the outer peripheral wall. In consequence, the honeycomb structure of cordierite can be obtained. According to such a method, there was manufactured, for example, a honeycomb structure including cells each having a quadrangular section, a partition wall thickness of 0.3 mm, a reference cell density of 300 cpsi (45.5 cells/cm²), a columnar outer shape (outer diameter: 191 mm, length: 203 mm) after the outer periphery was coated, and a plugging depth of 10 mm.

Though conventional plugging method had a plugging depth.precision of 10 ± 5 mm, a precision of 10 ± 2 mm was obtained by the method shown in Figs. 1(a), 1(b), and 1(c). Similarly, in a honeycomb structure including cells each having a quadrangular section and partition walls each having a thickness of 0.3 mm; having a reference cell density of 200 cpsi (31 cells/cm²); and having a columnar outer shape (an outer diameter: 229 mm, a length: 305 mm) after the outer periphery of the honeycomb structure was coated, and a honeycomb structure having a columnar outer shape (an outer diameter: 460 mm, a length: 500 mm) after the outer periphery was coated, a plugging depth precision equal to the above precision was obtained. These honeycomb structures had characteristics that a porosity was 45 to 90%, an average pore diameter was 5 to 50 µm, and an average coefficient of thermal expansion in an axial direction at 40 to 800°C was about 0.1 to 1.0×10⁻⁶/°C.

Moreover, a honeycomb structure having an outer diameter of 191 mm to 460 mm was manufactured using the same materials, in which each cell had a combined sectional shape of octagonal and quadrangular shapes, a partition wall thickness was 0.41 mm and a reference cell density was 300 cpsi (45.5 cells/cm²). Furthermore, it was possible to manufacture a honeycomb structure having a columnar outer shape integrally formed without processing an outer periphery (an outer diameter: 144 mm, a length: 152 mm) and having a plugging depth of 3 mm. Though a conventional plugging method had a plugging depth precision of 3 ± 2 mm, a precision of 3 ± 1 mm was obtained by the present method. In consequence, the plugging depth can further be reduced to 1 to 2 mm. In the outer peripheral portion of this honeycomb structure, the cells come into contact with an outer wall to form incomplete cells. Even these incomplete cells were alternately plugged. In the case that the structure is vertically disposed and plugged, the plugging depth precision deteriorates in the conventional method as compared with a case where the structure is horizontally disposed. However, in the present method, the precision does not deteriorate even in the case where the structure is vertically disposed.

### (Example 2)

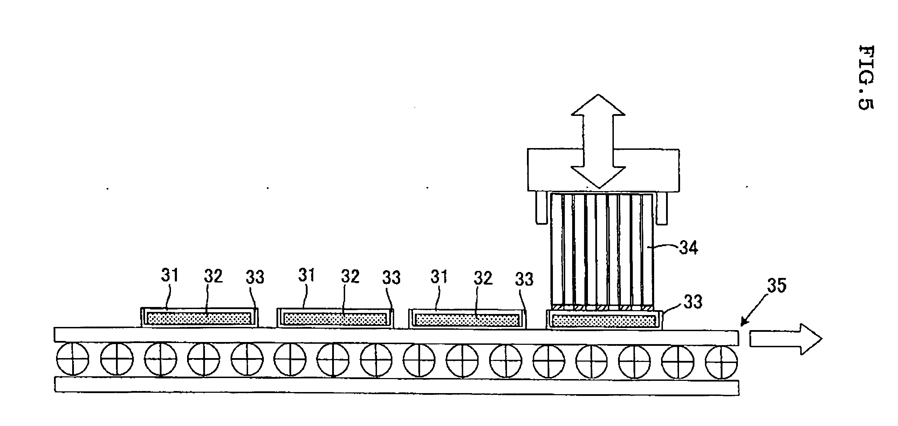

As shown in Fig. 5, three kinds of plugging were performed to a honeycomb structure similar to that of Example 1 in a method of plugging in multilayer by disposing a plurality of flat-shaped elastic porous members 32 in series and moving the members on a conveyer. For convenience, the honeycomb structure is shown by a cross-sectional view. In the first plugging, the porous members (thickness of about 0.5 mm) 32 were disposed in series in the vessel 33 containing slurried plugging material 31, and plugging was performed six times to obtain a plugging depth of about 3 mm. In the second plugging, the porous members (thickness of about 0.2 mm) 32 were disposed in series in the vessel 33 containing slurried plugging material 31, and plugging was performed six times to obtain a plugging depth of about 1 mm. In the third plugging, the porous members (thickness of about 0.05 mm) 32 were disposed in series in the vessel 33 containing slurried plugging material 31, and plugging was performed six times to obtain a plugging depth of about 0.3 mm.

### (Examples 3)

As shown in Fig. 5, the plugging portion had a structure formed of six thin layers along the cell passage direction in a method of plugging in multilayer by disposing a plurality of flat-shaped elastic porous members 32 in series and moving the members on a conveyer 35. For example, in the first plugging, six layers each having a thickness of about 0.5 mm were piled up to form a plugging portion having a plugging depth of about 3 mm. According to the present invention, a plugging portion structure having different materials along the cell passage direction can be obtained by changing materials for each layer. The first layer and the second layer were of dense cordierite having a porosity of 10 to 30%, the third layer and the fourth layer had a porosity of 30 to 45%, and the fifth layer and the sixth layer had a porosity of 45 to 90% in such a manner that the plugging portion has high density and high heat capacity on the inner side and high porosity and low rigidity structure on the surface side. The plugging materials for the first to fourth layers can be densified by adjusting a compounding ratio for cordierite raw materials and particle size distribution of each raw material. To the plugging members for the fifth layer and the sixth layer, an appropriate amount of a foaming resin or an absorbent polymer was added to raise the porosity.

### (Example 4)

In a manner similar to that of the Example 3, the first layer and the second layer were of cordierite having a high porosity of 45 to 90%, the third layer and the fourth layer had a porosity of 30 to 45%, and the fifth layer and the sixth layer had a porosity of 10 to 30% to obtain a structure of the plugging portion having high porosity on the inner side and excellent erosion resistance on the surface side.

It is to be noted that the specific implementation result has been described in accordance with the plugged honeycomb structure (DPF) constituted of the cordierite material, but needless to say, the present invention is applicable to a so-called DPF product made of SiC in which a segment-bonding structure of an SiC material is used.

As clear from the above embodiments, according to a manufacturing method of the present invention, the following remarkable effect is exhibited.

The plugging depth can freely be adjusted in accordance with a compressive deformation amount of the perforated sponge-like member and/or the other sponge-like member inserted into the holes of the perforated sponge-like member. When the compressive deformation amount is changed depending on a portion of the sponge-like member, the plugging depth of the cell disposed in the corresponding position can be changed. For example, it is possible that the plugging depth is increased in the center of the honeycomb structure and decreased at the outer peripheral portion of the structure, and the reverse is also possible.

Since the sponge-like member prevents the slurried plugging material from being easily moved in the vessel, the slurried plugging material does not move to the outer peripheral portion of the honeycomb structure during the insertion under pressure.

Since the slurried plugging material is held by the perforated sponge-like member and/or the other sponge-like member in the holes of the perforated sponge-like member, the slurried plugging material does not drip off from even the vertically disposed perforated sponge-like member. Even in a case where the honeycomb structure is plugged in a state in which the structure is horizontally disposed, the plugging portions having a uniform depth can easily be formed.

When another sponge-like member is disposed in the holes of the perforated sponge-like member, the slurried plugging material is more stably held. In this case, by vertically disposing the honeycomb structure beforehand and pressing the perforated sponge-like member and the other sponge-like member in the holes on the upper end surface of the structure, the upper end surface can be plugged.

When the honeycomb structure is large and heavy, the light sponge-like member can be moved without vertically moving the honeycomb structure. Therefore, the device can mechanically be simplified, and the honeycomb structure can be prevented from being damaged.

When the mask is used, the sponge-like member comes into direct contact with the end surface or a mask surface of the honeycomb structure, an excessive amount of the slurried plugging material is not easily left on the end surface or the mask surface of the honeycomb structure.

### Industrial Applicability

A plugged honeycomb structure manufactured by a manufacturing method of the present invention is preferably used in an environmental countermeasure such as prevention of pollution, a dust-collecting filter for use in an application such as product recovery from high temperature gas, or a dust-collecting filter for use under a corrosive gas atmosphere at high temperature such as a diesel particulate filter (DPF) which traps particulate matter discharged from a diesel engine, and the structure is remarkably industrially significant.

## Claims

1. A method for manufacturing a plugged honeycomb structure having a plugging portion formed in one opening end portion of each of predetermined cells of a cylindrical honeycomb structure including a plurality of cells partitioned and formed into a honeycomb shape by porous partition walls to form fluid passages,
wherein holes of a perforated elastic porous member are impregnated beforehand with a slurried plugging material, and the elastic porous member is pressed on an end surface of the honeycomb structure to thereby fill the slurried plugging material filled into the holes of the elastic porous member into cell passages of the honeycomb structure to form the plugging portions.

2. A method for manufacturing a plugged honeycomb structure having a plugging portion formed in one opening end portion of each of predetermined cells of a cylindrical honeycomb structure including a plurality of cells partitioned and formed into a honeycomb shape by porous partition walls to form fluid passages,
wherein another elastic porous member is inserted beforehand into holes of a perforated elastic porous member, the elastic porous member inserted into the holes is impregnated with a slurried plugging material, then the elastic porous member impregnated with the slurried plugging material in the holes is pressed on an end surface of the honeycomb structure, and the slurried plugging material contained in the elastic porous member is filled into cell passages of the honeycomb structure to form the plugging portions.

3. A method for manufacturing a plugged honeycomb structure according to claim 1 or 2, wherein a means for pressing the perforated elastic porous member on the end surface of the honeycomb structure is a roller.

4. A method for manufacturing a plugged honeycomb structure according to any one of claims 1 to 3, wherein the elastic porous member is a cloth-like or sponge-like porous member or absorbent member.

5. A plugged honeycomb structure having a plugging portion formed in one opening end portion of each of predetermined cells of a cylindrical honeycomb structure including a plurality of cells partitioned and formed into a honeycomb shape by porous partition walls to form fluid passages, wherein the plugging portions are formed in multilayer along a cell passage direction.

6. A plugged honeycomb structure according to claim 5, wherein the plugging portions are formed in multilayer along the cell passage direction, and a material for at least one layer is different from that for the other layers.
